# EUROPEAN PATENT SPECIFICATION

(11) **EP 1 974 517 B1**
(45) Date of publication and mention of the grant of the patent: **23.02.2011**
(21) Application number: 07701248.2
(22) Date of filing: 16.01.2007
(51) Int. Cl.: H04L 27/26

(54) **MULTI-SYMBOL SIGNALS INCLUDING AN INITIAL SYMBOL AND AN EXTENSION PORTION**
MEHRSYMBOL-SIGNALE MIT EINEM ANFANGSSYMBOL UND EINEM ERWEITERUNGSTEIL
SIGNAUX À PLUSIEURS SYMBOLES COMPRENANT UN SYMBOLE INITIAL ET UNE PARTIE D'EXTENSION

(30) Priority: 17.01.2006 US 333759
(43) Date of publication of application: 01.10.2008
(73) Proprietor: QUALCOMM Incorporated, San Diego, CA 92121 (US)
(72) Inventor: LAROIA, Rajiv, Basking Ridge, NJ 07931 (US)
(74) Representative: Carstens, Dirk Wilhelm
(86) International application number: PCT/US2007/060593
(87) International publication number: WO 2007/084898

(56) References cited:
- EP-A- 1 605 658
- WO-A-03/017608
- US-A1- 2002 159 531
- US-A1- 2004 005 022
- US-A1- 2005 213 532
- US-A1- 2005 233 746
- US-A1- 2005 233 752

## Description

### FIELD OF THE INVENTION

The present invention relates to methods and apparatus of wireless signaling and, more particularly, to methods and apparatus for generating, transmitting, and/or using multi-symbol signals including an initial symbol and an extension portion, e.g., a multi-symbol OFDM downlink beacon/timing synchronization signal.

### BACKGROUND

Communications systems often include a plurality of base stations. As a wireless terminal moves throughout a system, it may seek to communicate with one or more of the base stations. The symbol transmission time of base stations in a system may or may not be synchronized to the level of a symbol transmission time period. Even if the transmission times are synchronized, the distance between the wireless terminal and one base station and the distance to another base station is not likely to be the same. As a result, if a wireless terminal is synchronized with one base station it is not likely to be timing synchronized with another base station.

For purposes of communicating with a base station, a wireless terminal normally needs to achieve timing synchronization with the base station. Absent proper timing synchronization, a wireless terminal may sample portions of different symbols and erroneously interpret them as corresponding to a single symbol.

In order to facilitate detection of a base station some systems transmit a beacon signal during a symbol transmission time period. While the relatively high power level makes the beacon signal easier to detect than lower power signals there remains a need for improving beacon signals.

In particular, there is a need for beacon signals which can be readily detected even in the presence of timing synchronization errors, e. g., where the wireless terminal's symbol timing may not be perfectly synchronized with the symbol timing of the base station which transmitted a received signal.

### BRIEF DESCRIPTION OF THE FIGURES

Figure 1 is a drawing of an exemplary wireless communications system implemented in accordance with the present invention.
Figure 2 is a drawing of an exemplary base station implemented in accordance with the present invention.
Figure 3 is a drawing of an exemplary wireless terminal implemented in accordance with the present invention.
Figure 4 is a drawing illustrating exemplary signaling an
Figure 5 is a drawing illustrating exemplary signaling
Figure 6 is a drawing illustrating exemplary signaling in accordance with an exemplary embodiment of the present invention.
Figure 7 is a drawing illustrating exemplary signaling.
Figure 8 is a drawing illustrating exemplary signaling.
Figure 9 is drawing illustrating exemplary beacon/timing synchronization broadcast composite multi-symbol signaling and subsequent signaling including user data in accordance with some embodiments of the present invention.
Figure 10 is a drawing used to illustrate the partitioning of an exemplary OFDM transmission time interval and exemplary signaling used to convey modulation symbol values.
Figure 11 represents the signal generation pattern used in an exemplary multi-symbol transmission signal, e.g., a beacon/timing synchronization signal, in an exemplary 113 tone 1.25MHz embodiment.
Figure 12 further illustrates exemplary beacon signal/timing synchronization signal construction.
Figure 13 is a drawing illustrating the concept of successive OFDM user data symbols using typical OFDM signaling.
Figure 14 is a drawing illustrating the concept of beacon/timing synchronization signaling in accordance with the present invention.
Figure 15 is a drawing used to illustrate the partitioning of an exemplary OFDM transmission time interval and exemplary signaling used to convey modulation symbol values.
Figure 16 represents the signal generation pattern used in an exemplary multi-symbol transmission signal, e.g., a beacon/timing synchronization signal, in an exemplary 339 tone 5MHz embodiment.
Figure 17 further illustrates exemplary beacon signal/timing synchronization signal construction.
Figure 18, comprising the combination of Figure 18A, Figure 18B, Figure 18C and Figure 18D, is a flowchart of an exemplary method of operating a base station, in accordance with the present invention.

Attention is drawn to WO 03/017608 A which describes a digital front-end for a wireless communication system that incorporates gain control, signal detection, frame synchronization and carrier frequency offset (CFO) estimation and correction features configured for use with multiple receive antennas. The digital front-end may be applied to a wireless communication system in which transmitted signals carry a repeated signal pattern, such as orthogonal frequency division multiplexing (OFDM) systems. An example of a repeated signal pattern is the preamble of a signal transmitted according to the IEEE 802.11a wireless local area network (WLAN) standard. The signal detection, frame synchronization, and CFO estimation techniques make use of signals received from multiple antenna paths to provide enhanced performance. The gain control feature may be configured to adjust the gain in steps. The frame synchronization technique may operate as a function of gain control, handling the input signal differently before and after gain adjustment.

Further attention is drawn to US 2004/005022 A1 which relates to methods and devices for receiving signals in a Wireless Local Area Network (wireless LAN, or WLAN), particularly in the case that the signals are Orthogonal Frequency Division Multiplexed (OFDM) signals. A symbol timing apparatus for an OFDM receiver is described having: means for determining the correlation of corresponding samples of two received preamble symbols, one said sample delayed a predetermined duration with respect to the other; means for determining the maximum correlation value within a predetermined integration window, said maximum value indicating the start of a symbol; wherein the integration window duration is not equal to said delay duration.

Attention is also drawn to US 2002/159531 A1 which describes orthogonal frequency division multiplexing (OFDM) receiver embodiments that provide data demodulator synchronization by finding the end of the short preamble in an IEEE-802.11 a burst transmission. This method exploits the fact that there are certain symmetries in the long-preamble that can be used to determine synchronization. The long-preamble sequence is composed of a guard interval (Gl) and two long-preamble symbols; the Gl is the last 32 samples of the long-preamble symbol. The 32nd sample of the long-preamble acts as a "pilot" or "anchor" sample in that the previous N and subsequent N samples are complex conjugates, or conjugate "mirror" vectors. Due to the periodicities of the long-preamble, this property repeats every 32 samples. No other samples in the long preamble exhibit this property. Coherent combining is used in one embodiment for robustness. Once

this "pilot" or "anchor" sample is located, the end of the short-preamble is declared to have occurred 32 samples earlier, thus establishing a time reference.

Finally, attention is drawn to EP-A-1 605 658 which describes that in an OFDM communications system, cyclic prefix and postfix samples are used to improve the reliability of a received OFDM symbol. Typically, the prefix and postfix extensions are merely repeated portions of the OFDM symbol that are ordinarily discarded during the decoding process. In the instant invention, the cyclic prefix and postfix samples are not indiscriminately discarded, but rather, they are first analyzed to determine which, if any, have been corrupted. The corrupted samples are discarded, but the uncorrupted samples are combined with the corresponding portion of the OFDM symbol to improve the OFDM symbol demodulation/decoding reliability.

### SUMMARY OF THE INVENTION

In accordance with the present invention a method of operating a base station transmitter, and a base station, as set forth in the independent claims, respectively, are provided. Preferred embodiments of the invention are disclosed in the dependent claims.

The methods and apparatus of the present invention are directed to improved methods of generating and transmitting beacon signals which can be easily detected by wireless terminals which do not have perfect timing synchronization with a base station transmitter from which the beacon signal is transmitted.

In accordance with the invention, a beacon signal is constructed as a multi-symbol signal. The duration of the multi-symbol signal is two or more times the symbol duration of a regular symbol, e.g., a symbol used to transmit user data. While transmitted symbols used to communicate user data may include a cyclic prefix portion and a body portion which, in combination last a single symbol transmission time period, the multi-symbol signal of the present invention includes an initial symbol which includes a cyclic prefix portion and a body portion which is immediately followed by a symbol extension portion. The symbol extension portion may continue for one or more symbol transmission time periods.

Because a beacon signal constructed in accordance with the invention continues for multiple symbol transmission time periods a wireless terminal can sample the signal for a full symbol transmission time period even if the wireless terminal is slightly miss-synchronized with the base station transmitting the beacon signal.

In some exemplary embodiments, a method of operating a base station transmitter in accordance with the invention comprises: generating a multi-symbol signal, e.g., an OFDM multi-symbol signal, and transmitting the multi-symbol signal. The step of generating a multi-symbol signal includes: generating an initial symbol including a cyclic prefix portion and a body portion and generating a symbol extension portion that immediately follows the initial symbol in the multi-symbol signal. The symbol extension portion includes a first copy of the body portion beginning from the start of the symbol extension portion. An exemplary base station includes a signal generator module for generating a multi-symbol signal and a transmitter coupled to the signal generator module for transmitting the generated multi-symbol signal as a plurality of consecutive symbols. The signal generator module includes an initial symbol generation module for generating an initial symbol including a cyclic prefix portion and a body portion, the body portion immediately following the cyclic prefix portion. The signal generator module also includes a symbol extension generation module for generating a symbol extension portion that immediately follows the initial symbol in the multi-symbol signal, the symbol extension portion includes a first copy of the body portion beginning from the start of the symbol extension portion.

Numerous additional features, benefits and embodiments of the invention are discussed and described in the detailed description which follows.

### DETAILED DESCRIPTION OF THE INVENTION

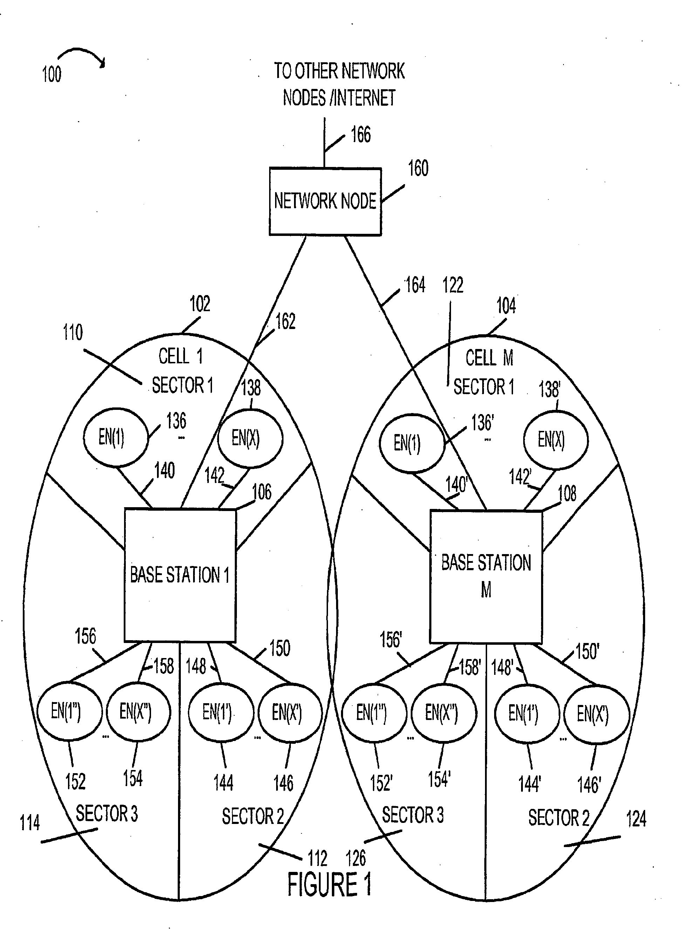

Figure 1 shows an exemplary communication system 100 implemented in accordance with the present invention including multiple cells: cell 1 102, cell M 104. Exemplary system 100 is, e.g., an exemplary OFDM spread spectrum wireless communications system such as a multiple access OFDM system. Each cell 102,104 of exemplary system 100 includes three sectors. Cells which have not be subdivided into multiple sectors (N=1), cells with two sectors (N=2) and cells with more than 3 sectors (N>3) are also possible in accordance with the invention. Each sector supports one or more carriers and/or downlink tones blocks. In some embodiments at least some of the sectors support three downlink tones blocks. Cell 102 includes a first sector, sector 1 110, a second sector, sector 2 112, and a third sector, sector 3 114. Similarly, cell M 104 includes a first sector, sector 1122, a second sector, sector 2 124, and a third sector, sector 3 126. Cell 1 102 includes a base station (BS), base station 1 106, and a plurality of end nodes (ENs) in each sector 110, 112, 114. Sector 1 110 includes EN(1) 136 and EN(X) 138 coupled to BS 106 via wireless links 140, 142, respectively; sector 2 112 includes EN(1') 144 and EN(X') 146 coupled to BS 106 via wireless links 148, 150, respectively; sector 3 114 includes EN(1") 152 and EN(X") 154 coupled to BS 106 via wireless links 156, 158, respectively. Similarly, cell M 104 includes base station M 108, and a plurality of end nodes (ENs) in each sector 122, 124, 126. Sector 1 122 includes EN(1) 136' and EN(X) 138' coupled to BS M 108 via wireless links 140', 142', respectively; sector 2 124 includes EN(1') 144' and EN(X') 146' coupled to BS M 108 via wireless links 148', 150', respectively; sector 3 126 includes EN(1") 152' and EN(X") 154' coupled to BS 108 via wireless links 156', 158', respectively.

System 100 also includes a network node 160 which is coupled to BS1 106 and BS M 108 via network links 162, 164, respectively. Network node 160 is also coupled to other network nodes, e.g., other base stations, AAA server nodes, intermediate nodes, routers, etc. and the Internet via network link 166. Network links 162, 164, 166 may be, e.g., fiber optic cables. Each end node, e.g. EN 1 136, may be a wireless terminal including a transmitter as well as a receiver. The wireless terminals, e.g., EN(1) 136 may move through system 100 and may communicate via wireless links with the base station in the cell in which the EN is currently located. The wireless terminals, (WTs), e.g. EN(1) 136, may communicate with peer nodes, e.g., other WTs in system 100 or outside system 100 via a base station, e.g. BS 106, and/or network node 160. WTs, e.g., EN(1) 136 may be mobile communications devices such as cell phones, personal data assistants with wireless modems, etc.

Each base station (106, 108) performs downlink signaling, in accordance with the invention, e.g., transmitting multi-symbol beacon/timing synchronization signals including an initial OFMD symbol and an extension OFDM symbol and transmitting user data OFDM symbols in accordance with a downlink timing and frequency structure. The different base station sector transmitters are not necessarily timing synchronized. For example, in some embodiments, sector transmitters of the same base station are timing synchronized, but sector transmitters from different base stations are not timing synchronized. The multi-symbol beacon/timing synchronization signals, are generated in accordance with the present invention to facilitate easy detection and measurement by a wireless terminal which can be closed loop timing synchronized with respect to one base station sector transmitter, but yet be able to receive and process beacon/timing synchronization signals from other base station sector transmitters, e.g., representing adjacent sectors and/or cells. In accordance with the present invention, the base station beacon/timing synchronization signaling facilitates the comparison of beacon signals from a plurality of different base station sector transmitters.

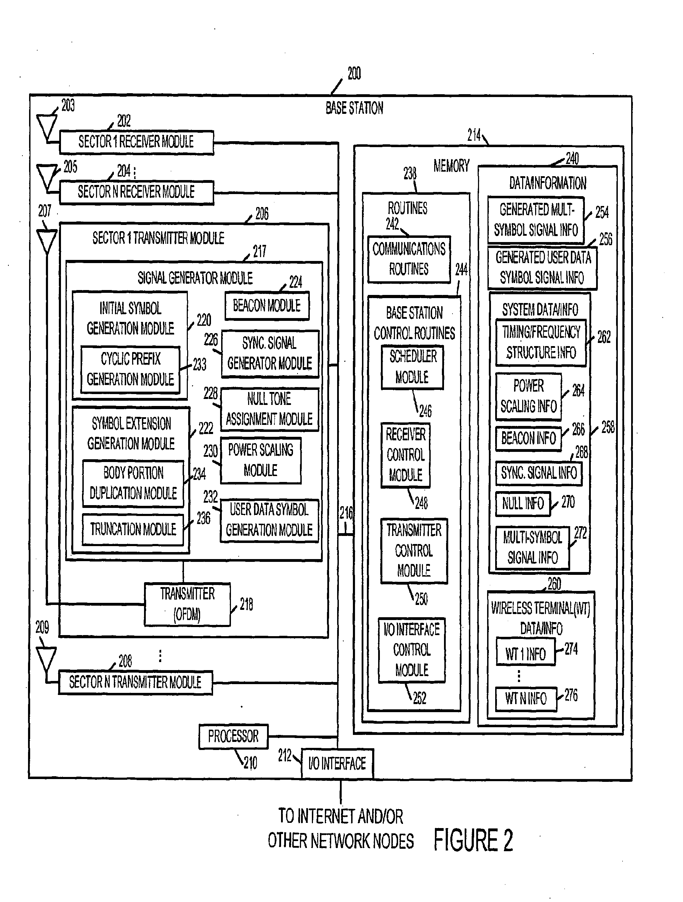

Figure 2 is a drawing of an exemplary base station 200, implemented in accordance with the present invention and using methods of the present invention. Exemplary base station 200 may be any of the base stations (106, 108) of exemplary system 100 of Figure 1. Exemplary base station 200 includes a plurality of sector receiver modules (sector 1 receiver module 202, ..., sector N receiver module 204), a plurality of sector transmitter modules (sector 1 transmitter module 206, ..., sector N transmitter module 208), a processor 210, an I/O interface 212, and memory 214 coupled together via a bus 216 via which the various elements can interchange data and information. In some embodiments, the number of sector transmitter modules, N, is such that N= 2, 3, or more than three.

In some embodiments, the base station corresponds to a single sector and the base station includes at most one sector transmitter module and one sector receiver module. In some such embodiments, the base station is co-located with other one sector base stations, the composite of a plurality of such base stations providing the coverage for a single cell. In some other such embodiments, the single sector base station corresponds to a cell, with the one single sector base station providing the full coverage for the entire cell area.

Sector 1 receiver module 202 is coupled to sector 1 receive antenna 203 via which the base station 200 receives uplink signals from wireless terminals using a base station 200 sector 1 physical attachment point as their point of attachment. Sector N receiver module 204 is coupled to sector N receive antenna 205 via which the base station receives uplink signals from wireless terminals using a base station 200 sector N physical attachment point as their point of attachment.

Sector 1 transmitter module 206 is coupled to sector 1 transmit antenna 207 via which the base station 200 transmits downlink signals to wireless terminals. Sector N transmitter module 208 is coupled to sector N transmit antenna 209 via which the base station 200 transmits downlink signals to wireless terminals. For example, in some embodiments, sector 1 transmitter module 206 transmits downlink signals including: (i) multi-symbol OFDM beacon/timing synchronization signals including an initial symbol portion and an extension symbol portion and (ii) downlink user data OFDM symbols including user data, control data and/or pilot signals.

In some embodiments for a given sector, the same antenna is used for a sector transmitter module and a sector receiver module. In some embodiments, for a given sector, the base station sector provides connectivity corresponding to multiple physical attachment points, e.g., corresponding to a plurality, e.g., three, of downlink tones blocks and/or downlink carriers.

Sector 1 transmitter module 206 includes a signal generator module 217 and an OFDM transmitter 218 coupled together. The signal generator module 217 generates signals including: multi- OFDM symbol signals including a beacon tone signal, timing synchronization signals and intentional NULL tones and (ii) single OFDM symbol signals including user data, control data and/or pilot signals. The signal generator module 217 includes an initial symbol generation module 220, a symbol extension generation module 222, a beacon module 224, a synchronization signal generator module 226, a null tone assignment module 228, a power scaling module 230, and a user data symbol generation module 232. The initial symbol generation module 220 generates the initial OFDM symbol in a multi-symbol signal, the initial OFDM symbol including a cyclic prefix portion and a body portion, the body portion immediately following the cyclic prefix portion. The initial symbol generation module 220 includes a cyclic prefix generation module 233. The cyclic prefix generation module 233 generates the cyclic prefix portion by copying and end portion of the body portion. The symbol extension generation module 222 generates a symbol extension portion, e.g., a symbol extension OFDM symbol, that immediately follows the initial symbol in the multi-symbol signal. The generated symbol extension portion includes a first copy of the body portion beginning from the start of the symbol extension portion. The symbol extension generation module 222 includes a body portion duplication module 234 and a truncation module 236. The body portion duplication module 234 copies the body portion of the initial OFDM symbol of the multi-symbol signal, which is included at the start of the extension portion. The truncation module 236 includes a truncated portion of the body portion in the extension symbol, the truncated portion includes an initial portion of the body portion. The truncated portion of the extension symbol immediately follows the copy of the body portion in the extension symbol.

In some embodiments, the initial symbol and the extension portion each include a single tone used in both the initial symbol and the extension portion to carry a beacon tone, and beacon module 224 identifies the beacon tone for a give multi-symbol signal in the downlink frequency/timing structure corresponding to the base station sector 1 transmitter module. Power scaling module 230 places more energy on the identified beacon tone than on any other tone in the initial symbol. In some embodiments, the energy placed on the single beacon tone is at least 6dB higher than the energy placed on any other tone include in the initial symbol in the multi-symbol signal.

In various embodiments, the body portion of the initial symbol and the extension symbol each include multiple tones. The synchronization signal generator module 226 includes a plurality of tones corresponding to a synchronization signal in both the body portion of the initial symbol and the extension portion, the plurality of tones being used for the synchronization signal being the same in both the initial symbol and the extension portion of the multi-symbol signal. The null tone assignment module 228 controls the transmitter 218 not to place energy on a plurality of NULL tones in both said initial symbol and the extension portion. The plurality of intentional NULL tones being controlled to the same in both the initial symbol and the extension portion of the multi-symbol signal. The intentional NULL tones in conjunction with the synchronization signal, e.g., a low power wideband synchronization signal with respect to a downlink tone block, facilitate measurements by wireless terminals.

In some embodiments, the initial OFDM. symbol includes a full set of downlink tones transmitted by the base transmitter module 206 during the period of the initial OFDM symbol. For example for an exemplary 1.25MHz OFDM embodiment the full set of downlink tones is a set of 113 tones and the initial OFDM symbol includes one high power beacon tone, a plurality of low power timing synchronization signal tones, e.g., 55 tones, and a plurality of Null tones, e.g., 57 NULL tones. As another example, for an exemplary 5 MHZ OFDM embodiment, the full set of downlink tones includes a set of 339 tones, and the initial OFDM symbol includes one high power beacon tone, a plurality of low power timing synchronization signal tones, e.g., 55, and a plurality of NULL tones, e.g., 283 NULL tones, with the beacon tone and the timing synchronization tones being within the same tone block of 113 contiguous tones corresponding to a physical attachment point for the sector transmitter module.

User data symbol generation module 232 generates OFDM user data symbols including user data, control data and/or pilot signals. For example, immediately following the multi-symbol signal, the initial symbol followed by extension symbol conveying the beacon and timing synchronization signals, user data symbol generation module 232 may generate a sequence of user data OFDM symbols, e.g. 112 user data OFDM symbols. For example, the multi-symbol signal may correspond to the first two OFDM symbols, e.g., strip symbols, in a superslot of 114 successive OFDM symbols and the 112 user data OFDM symbols may be the OFDM symbols of the eight slots of the same superslot. Each user data symbol includes a user data body portion and a user data cyclic prefix portion. The user data body portion includes at least some user data, provided the base station has at least some downlink user data to transmit at that time. For example, an exemplary OFDM user data symbol includes modulation symbol values corresponding to four different traffic channel segments, each conveying modulation symbol values used to convey coded user data information bits. The different channel segments of a given OFDM user data symbol may be associated with different transmission power levels. In some embodiments each of the OFDM user data symbols is controlled, e.g., by the power scaling module 230 to be transmitted at a per tone power level which is at least 6dB lower than the highest per tone power level of a tone in an initial symbol of a multi-symbol signal. In some embodiments, some, all, or portions of the signal generation module 217 are included in routines 238. Transmitter 218 is an OFDM transmitter which transmits signals generated by the signal generation module 217.

I/O interface 212 couples the base station 200 to the Internet and/or other network nodes, e.g., routers, other base stations, AAA nodes, central control nodes, Home Agent nodes, etc. Thus I/O interface 212 provides a network interface for wireless terminals using a base station 200 physical attachment point, facilitating communications sessions between WTs in different cells.

Memory 214 includes routines 238 and data/information 240. The processor 210, e.g., a CPU, executes the routines 238 and uses the data/information 240 in memory 214 to control the operation of the base station 200 and implement methods of the present invention. Routines 238 include communications routines 242 and base station control routines 244. The communications routines 242 implement the various communications protocols used by the base station 200. The base station control routines 244 include a scheduler module 246, a receiver control module 248, a transmitter control module 250, and an I/O interface control module 252. The scheduler module 246, e.g., a scheduler, schedules air link resources, e.g., assigning uplink and downlink segments including traffic channel segments to wireless terminals using a base station 200 attachment point.

Receiver control module 248 controls the operation of the sector receiver modules (202, 204). Transmitter control module 250 controls the operation of the sector transmitter modules (206, 208). I/O interface control module 252 controls the operation of I/O interface 212.

Data/information 240 includes generated multi-symbol signal information 254, generated user data symbol signal information 256, system data/information 258 and wireless terminal data information 260. System data/information 258 includes timing/frequency structure information 262, power scaling information 264, beacon information 266, synchronization signal information 268, null information 270, and multi-symbol signal information 272. WT data/information 260 includes a plurality of sets of WT data/information (WT 1 data/information 274, .., WTN data/information 276), each set of WT data information corresponding to a WT using a base station 200 attachment point.

Generated multi-symbol signal information 254 includes information pertaining to generated multi-symbol signals, e.g., information representing the generated signal and/or portions of the generated signal. For example, information 254 includes information representing: the body portion of the initial symbol, the end portion of the body portion, the cyclic prefix portion, the repeat portion of the body portion used as the first portion of the extension symbol, the initial portion of the body portion, and the truncation portion used as the second portion of the extension symbol.

Generated used data symbol signal information 256 includes information pertaining to a generated user data symbol. For example, information 256 includes information representing a body portion, information representing an end portion of the body portion, and information representing a cyclic prefix portion.

Timing/frequency structure information 262 includes downlink and uplink timing and frequency structure information. Downlink timing and frequency structure information includes information identifying: blocks of downlink tones used by each base station sector transmitter module, numbers of downlink tones used, channel segment structure, tone hopping information, repetitive timing structure used by each base station sector transmitter module, e.g., identifying when in the timing structure a multi-symbol OFDM beacon/timing synchronization signal should be transmitted and when an OFDM user data symbol should be transmitted. Power scaling information 264 includes information identifying power levels associated with beacon signals, timing synchronization signals, user data signals, control data signals, and pilot tone signals. Beacon signal information 266 includes information identifying which tones in the downlink tones blocks are to be used as beacon tones by which sector transmitter modules at designated locations in the repetitive downlink timing structure, and information identifying the modulation signal value to be conveyed by the body portion of the initial OFDM symbol of the multi-symbol signal for the beacon tone. Synchronization signal information 268 includes information identifying which tones in the downlink tones blocks are to be used as synchronization signal tones by which sector transmitter modules at designated locations in the downlink timing structure, and information identifying the modulation signal value to be conveyed by the body portion of the initial OFDM symbol of the multi-symbol signal for each of the synchronization signal tones. NULL information 270 includes information identifying which tones in the downlink tones blocks are to be used as intentional NULL tones by which sector transmitter modules at designated locations in the downlink timing structure of the multi-symbol signals. Multi-symbol signal information 272 includes information used in generating the multi-symbol signals, e.g., information identifying the duration of the body portion, the duration of the cyclic prefix portion, information including formulas used for copying a body portion of an initial symbol to a repeat body portion of a extension symbol, formulas used for generating a truncated portion of a body portion to be used as a second portion of an extension symbol.

Each set of WT data information includes user data, identification information, and user/device/session/resource information. The user data includes, e.g., voice data, audio data, image data, text data, file data, etc., to be transmitted and/or received by the wireless terminal in a communications session with a peer node. The user data includes downlink user data to be transmitted to the WT via downlink traffic channel segments assigned to the WT using OFDM user data symbols. Identification information includes information identifying the attachment point sector and/or tone block associated with the WT connection, WT identifiers, addresses, and base station assigned user identifiers such as an active user identifier..User device/session/resource information includes information pertaining to device control parameters, peer node information, address information, session establishment and maintenance information, and air link resource information, e.g., uplink and/or downlink segments assigned to the WT.

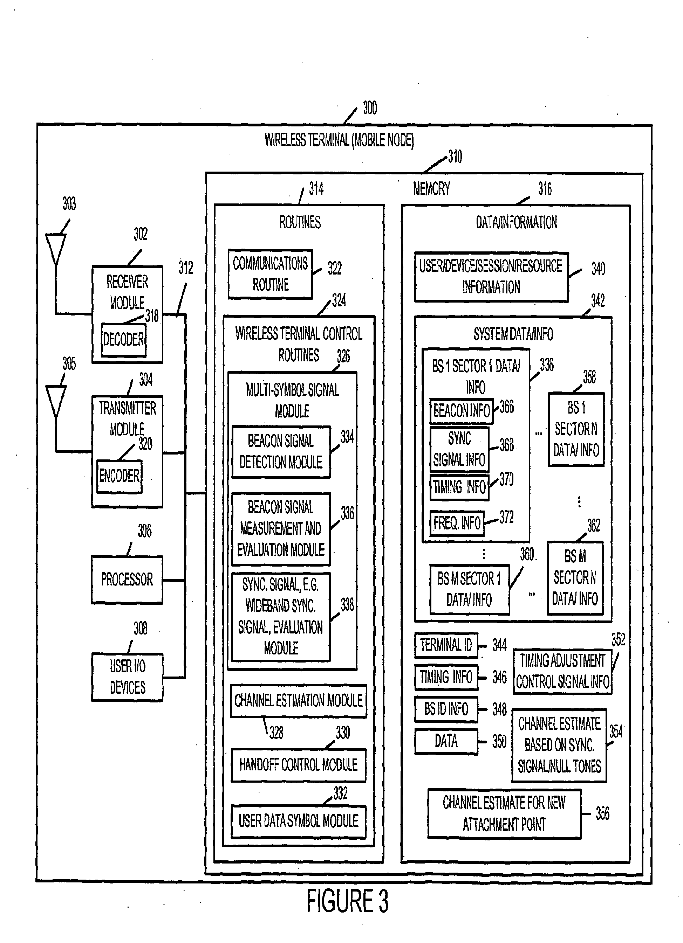

Figure 3 illustrates an exemplary wireless terminal 300, e.g., mobile node, implemented in accordance with the present invention. Exemplary wireless terminal 300 may be any of the exemplary wireless terminal implemented in accordance with the present invention, e.g. , ENs 136, 138, 144, 146, 152 ,154, 136', 138', 144', 146', 152', 154' of exemplary system 100 of Figure 1. The exemplary wireless terminal 300 includes a receiver module 302, a transmitter module 304, a processor 306, user I/O devices 308, and a memory 310 coupled together via a bus 312 over which the various elements can interchange data and information.

The wireless terminal 300 includes receiver and transmitter antennas 303, 305 which are coupled to receiver and transmitter modules 302, 304 respectively. The wireless terminal receiver module 302 receives downlink signals including: (i) multi-symbol OFDM beacon signals / timing synchronization signals including an initial OFDM symbol and an extension OFDM symbol and (ii) user data OFDM symbols including user data, control data, and/or pilot signals via antenna 303. In some embodiments a single antenna is used for receiver and transmitter, e.g., in combination with a duplex module. The receiver module 302 includes a decoder 318, while the transmitter module 304 includes an encoder 320. User I/O devices 308, e.g., microphone, keypad, keyboard, camera, mouse, switches, speaker, display, etc., allow the user of WT 300 to input user data, output user data, control applications, and control at least some operations of the wireless terminal, e.g., initiate a communications session.

Memory 310 includes routines 314 and data/information 316. Processor 306, e.g., a CPU, under control of one or more routines 314 stored in memory 310 uses the data/information 316 to cause the wireless terminal 300 to operate in accordance with the methods of the present invention. In order to control wireless terminal operation, routines 314 includes communications routine 322, and wireless terminal control routines 324. The communications routine 322 implements various communications protocols used by the wireless terminal 300. The wireless terminal control routines 324 are responsible for insuring that the wireless terminal 300 operates in accordance with the methods of the present invention. Wireless terminal control routines 324 include a multi-symbol signal module 326, a channel estimation module 328, a handoff control module 330, and a user data symbol module 332. The multi-symbol signal module 326 includes a beacon signal detection module 334, a beacon signal measurement and evaluation module 336, a synchronization signal evaluation module 338. Beacon signal detection module 334 is used for detecting and identifying beacon signals from a plurality of cells and/or sector base station transmitters. Beacon signal measurement and evaluation module 336 measures the energy level and/or strength of the received beacon signals and evaluates beacon signals with respect to other received beacon signals. Synchronization signal evaluation module 338 processes received synchronization signals, e.g., wideband synchronization signals communicated in parallel with a beacon signal as part of a multi-symbol signal, and determines synchronization timing from the signals, e.g., used in establishing communications with a different base station as the mobile node's attachment point. Synchronization signal evaluation module 338 processes a received synchronization signal to produce a timing adjustment control signal. Channel estimation module 328 performs a channel estimate based on the received synchronization signal and Null tones included in the received multi-symbol signal. Handoff control module 330 is used for changing attachment points, e.g., from one base station sector associated with a tone block to another base station sector associated with a tone block, and the handoff control module 330 controls the adjustment of transmitter 304 timing at the appropriate time in the handoff process using information supplied by the synchronization signal evaluation module 338. In addition, the handoff control module 330 uses the channel estimate based on the synchronization signal and Null tones 354 to initialize another channel estimate 356 that is to be used when attaching to the point from which the synchronization signal used to generate the channel estimate was transmitted.

User data symbol module 332 processes received user data OFDM symbols, e.g., extracting received pilot signal information. Some of the received OFDM user data symbols recovered include user data directed to the wireless terminal 300 and/or control data relevant to the wireless terminal 300, and the WT 300 recovers such communicated data. For example, a recovered OFDM user data symbol may include a portion of a downlink traffic channel segment assigned to WT 300, and the WT recovers the bits associated with the modulation symbols of the portion of the downlink traffic channel segment.

Data/information 316 includes user/device/session /resource information 340, e.g., user information, device information, WT 300 state information, peer node info, addressing information, routing information, session parameters, air link resource information such as information identifying uplink and downlink channel segments assigned to WT 300. User/device/session/resource information 300 may be accessed and used to implement the methods of the present invention and/or data structures used to implement the invention. Data/information 316 also includes system data/information 342 which includes a plurality of sets of system base station information (BS 1 sector 1 data/information 336, ..., BS 1 sector N data/information 358, BS M sector 1 data/information 360, ..., BS M sector N data/information 362). BS 1 sector 1 data/information 336 includes beacon information 366, synchronization signal information 368, timing information 370, and frequency information 372. Data/information 316 also includes a terminal ID 344, e.g., a BS assigned identifier, timing information 346, e.g., pertaining to the current point of attachment and also pertaining to other base stations, base station identification information 348, e.g., the ID of the current attachment point and the ID of each BS sector associated with a received beacon signal. Data/information 316 also includes data 350, e.g., user data such as voice data, image data, audio data, text data, file data, etc., received from and to be transmitted to a peer node of WT 4000 in a communications session with WT 300. User data includes user data recovered from received OFDM user data symbols corresponding to portions of downlink traffic channel segments assigned to WT 300.

Data/information 316 also includes timing adjustment control signal information 352, channel estimate based on synchronization signal/Null tones 354, and channel estimate for new attachment point 356. Timing adjustment control signal information 352 is an output of the synchronization signal evaluation module 338 and is used as an input by the handoff control module 330. Channel estimate based on synchronization signal/Null tones 354 is an output of the channel estimation module 328 and is used an input to the handoff control module 330, which uses channel estimate 354 to initialization of another channel estimate, channel estimate for new attachment point 356.

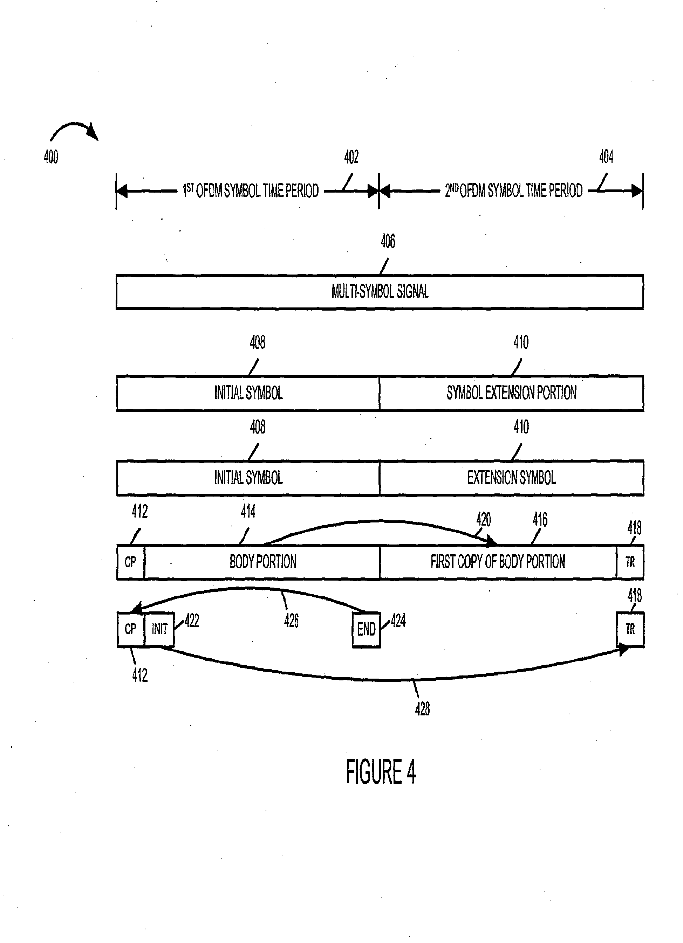

Figure 4 is a drawing 400 illustrating exemplary signaling. Figure 4 illustrates an exemplary multi-symbol signal 406, e.g., a beacon timing synchronization signal generated by a base station. The multi-symbol signal 406 is transmitted by the base station transmitter, e.g., a base station sector transmitter, during 1^{st} OFDM symbol time period 402 and 2nd OFDM symbol time period 404. The exemplary multi-symbol signal 406 includes an initial OFDM symbol 408 and a symbol extension portion 410. In this example, the symbol extension portion 410 is an extension OFDM symbol. The initial symbol 408 includes a cyclic prefix portion 412 and a body portion 414, body portion 414 immediately following the cyclic prefix portion 412. The body portion 414 includes an end portion 424, which is copied to generate the cyclic prefix portion 412, as indicated by arrow 426. The symbol extension portion 410 includes a first copy of the body portion 416 and a truncated portion of the body portion 418. Arrow 420 indicates that first copy of body portion 416 is a copy of body portion 414. Body portion 414 also includes an initial portion 422 which is copied to generate truncated portion 418, as indicated by arrow 428.

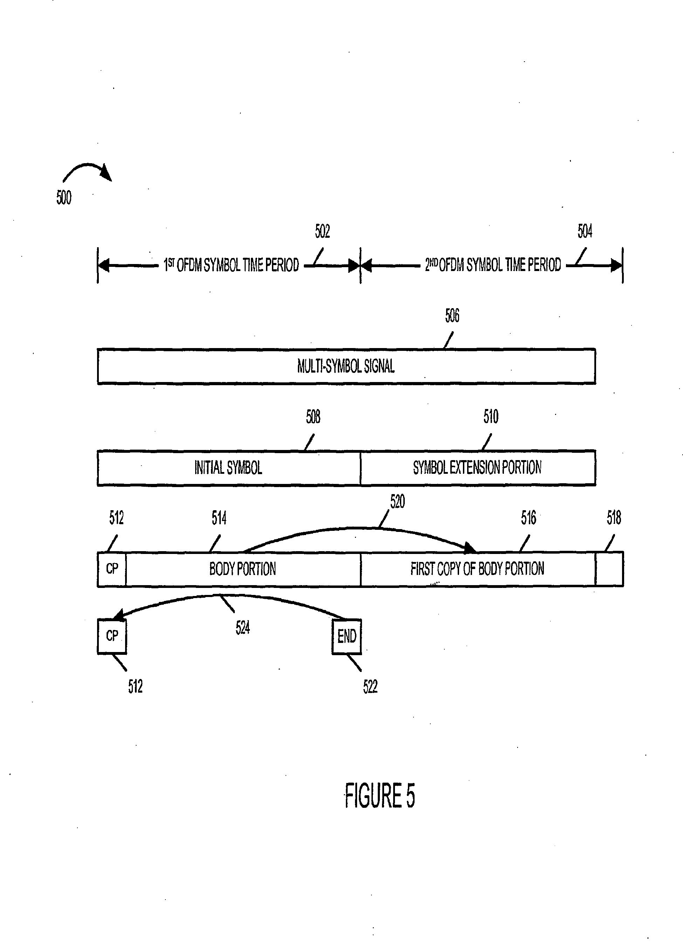

Figure 5 is a drawing 500 illustrating exemplary signaling an Figure 5 illustrates an exemplary multi-symbol signal 506, e.g., a beacon timing synchronization signal generated by a base station. The multi-symbol signal 506 is transmitted by the base station transmitter, e.g., a base station sector transmitter, during 1^{st} OFDM symbol time period 502 and 2nd OFDM symbol time period 504. The exemplary multi-symbol signal 506 includes an initial OFDM symbol 508 and a symbol extension portion 510. The initial symbol 508 includes a cyclic prefix portion 512 and a body portion 514, body portion 514 immediately following the cyclic prefix portion 512. The body portion 514 includes an end portion 522, which is copied to generate the cyclic prefix portion 512, as indicated by arrow 524. The symbol extension portion 510 includes a first copy of the body portion 516. An additional signaling portion 518 immediately follows the symbol extension portion 510 and occupies the remainder of the 2^{nd} OFDM symbol time period 504 not used by the symbol extension portion 510. In some embodiments, the additional signaling portion 518 represents a null signal. Arrow 520 indicates that first copy of body portion 516 is a copy of body portion 514.

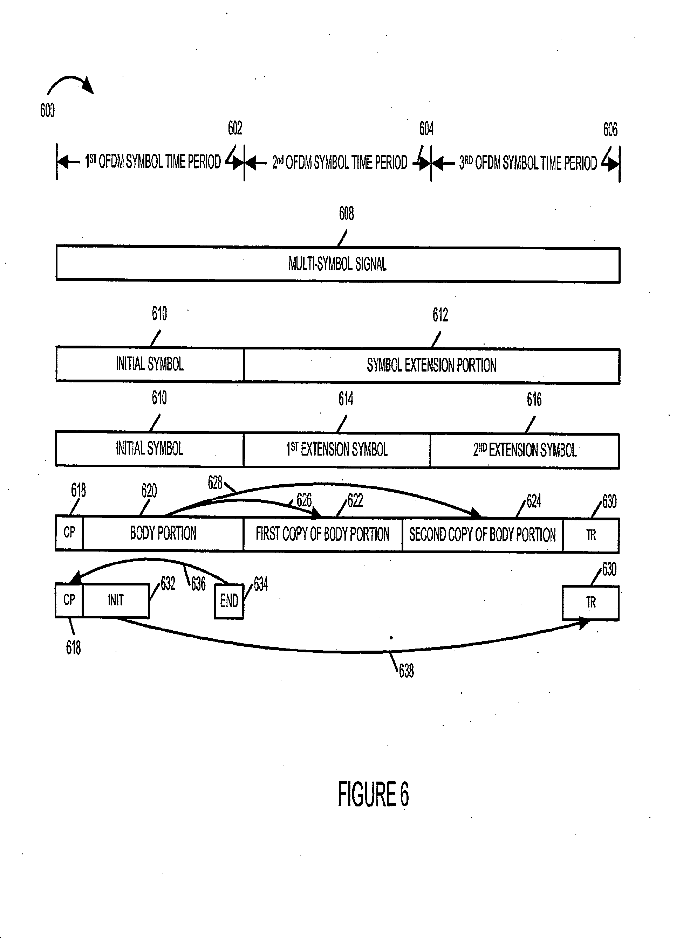

Figure 6 is a drawing 600 illustrating exemplary signaling in accordance with an exemplary embodiment of the present invention. Figure 6 illustrates an exemplary multi-symbol signal 608, e.g., a beacon timing synchronization signal generated by a base station. The multi-symbol signal 608 is transmitted by the base station transmitter, e.g., a base station sector transmitter, during 1^{st} OFDM symbol time period 602, 2nd OFDM symbol time period 604, and 3^{rd} OFDM symbol time period 606. The exemplary multi-symbol signal 608 includes an initial OFDM symbol 610 and a symbol extension portion 612. In this example, the symbol extension portion 612 includes a first extension OFDM symbol 614 and a second extension OFDM symbol 616. The initial symbol 610 includes a cyclic prefix portion 618 and a body portion 620, the body portion 620 immediately following the cyclic prefix portion 618. The body portion 620 includes an end portion 634, which is copied to generate the cyclic prefix portion 618, as indicated by arrow 636. The symbol extension portion 612 includes a first copy of the body portion 622, a second copy of the body portion 624, and a truncated portion of the body portion 630. Portion 622 is immediately followed by portion 624 which is immediately followed by portion 630. Arrow 626 indicates that first copy of body portion 622 is a copy of body portion 620; arrow 628 indicates that second copy of body portion 624 is a copy of body portion 620. Body portion 620 also includes an initial portion 632 which is copied to generate truncated portion 630, as indicated by arrow 638.

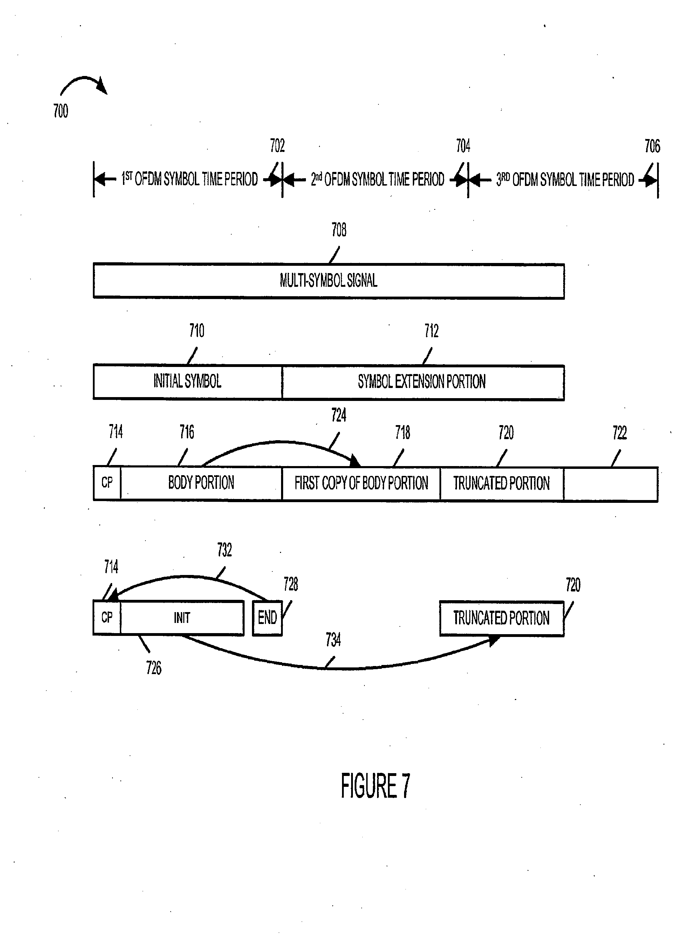

Figure 7 is a drawing 700 illustrating exemplary signaling.
Figure 7 illustrates an exemplary multi-symbol signal 708, e.g., a beacon timing synchronization signal generated by a base station. The multi-symbol signal 708 is transmitted by the base station transmitter, e.g., a base station sector transmitter, during 1^{st} OFDM symbol time period 702, 2nd OFDM symbol time period 704, and 3^{rd} OFDM symbol time period 706. The exemplary multi-symbol signal 708 includes an initial OFDM symbol 710 and a symbol extension portion 712. The initial symbol 710 includes a cyclic prefix portion 714 and a body portion 716, the body portion 716 immediately following the cyclic prefix portion 714. The body portion 716 includes an end portion 728, which is copied to generate the cyclic prefix portion 714, as indicated by arrow 732. The symbol extension portion 712 includes a first copy of the body portion 718 and a truncated portion of the body portion 720. An additional signaling portion 722 immediately follows the symbol extension portion 712 and occupies the remainder of the 3^{rd} OFDM symbol time period 706 not used by the symbol extension portion 712. In some embodiments, the additional signaling portion 722 represents a null signal. Portion 718 is immediately followed by portion 720 which is immediately followed by portion 722. Arrow 724 indicates that first copy of body portion 718 is a copy of body portion 716. Body portion 716 also includes an initial portion 726 which is copied to generate truncated portion 720, as indicated by arrow 734.

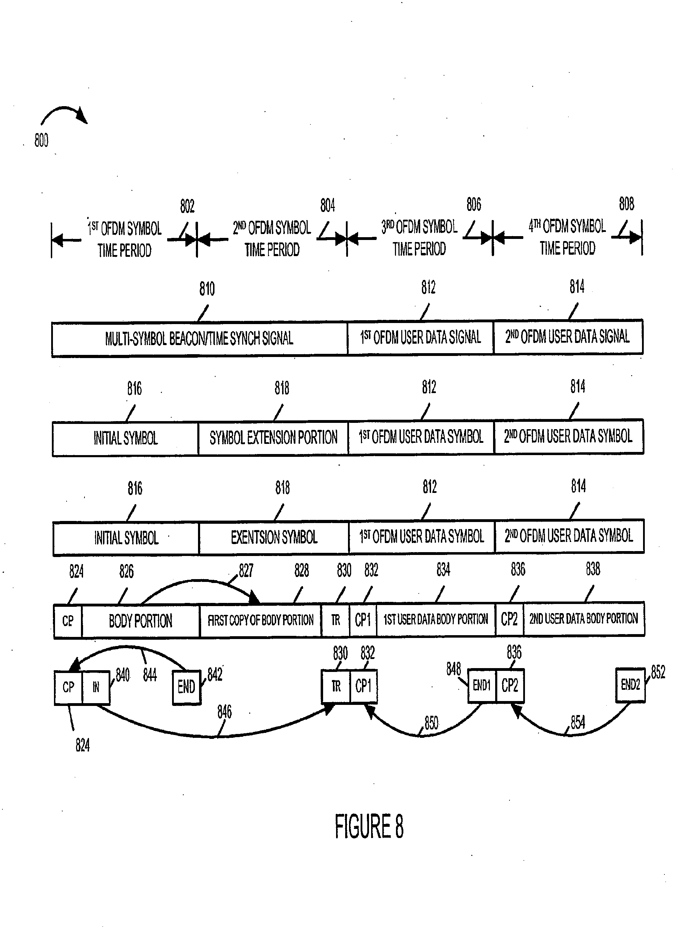

Figure 8 is a drawing 800 illustrating exemplary signaling. Figure 8 illustrates an exemplary multi-symbol beacon/timing synchronization signal 806 generated by a base station. The multi-symbol beacon/timing synchronization signal 810 is transmitted by the base station transmitter, e.g., a base station sector transmitter, during 1^{st} OFDM symbol time period 802 and 2nd OFDM symbol time period 804. Exemplary multi-symbol beacon/timing synchronization signal 810 may be exemplary multi-symbol signal 406 of Figure 4. The multi-symbol beacon/timing synchronization signal 810 is followed immediately by a 1^{st} OFDM user data signal 812 which is transmitted during 3^{rd} OFDM symbol time period 806. A 2^{nd} OFDM user data signal 814 is transmitted during the next subsequent OFDM symbol time period, 4^{th} OFDM symbol time period 808. In this example, the 1^{st} OFDM user data signal 812 is a 1^{st} OFDM user data symbol which includes a plurality of tones conveying user data and a plurality of tones conveying control data, and the 2^{nd} OFDM user data signal 814 is a 2^{nd} OFDM user data symbol which includes a plurality of tones conveying user data and a plurality of tones conveying control data.

The exemplary multi-symbol beacon/timing synchronization signal 810 includes an initial OFDM symbol 816 and a symbol extension portion 818. In this example, the symbol extension portion 818 is an extension OFDM symbol. The initial symbol 816 includes a cyclic prefix portion 824 and a body portion 826, body portion 826 immediately following the cyclic prefix portion 824. The body portion 826 includes an end portion 842, which is copied to generate the cyclic prefix portion 824, as indicated by arrow 844. The symbol extension portion 818 includes a first copy of the body portion 828 and a truncated portion of the body portion 830. Arrow 827 indicates that first copy of body portion 828 is a copy of body portion 826. Body portion 826 also includes an initial portion 840 which is copied to generate truncated portion 830, as indicated by arrow 846.

First OFDM user data symbol 812 includes a first user data symbol cyclic prefix portion 832 and a first user data symbol body portion 834, body portion 834 immediately following the cyclic prefix portion 832. The first user data symbol body portion 834 includes a 1^{st} user data symbol end portion 848, which is copied to generate the first user data cyclic prefix portion 832, as indicated by arrow 850.

Second OFDM user data symbol 814 includes a second user data symbol cyclic prefix portion 836 and a second user data symbol body portion 838, body portion 838 immediately following the cyclic prefix portion 836. The second user data symbol body portion 838 includes a 2^{nd} user data symbol end portion 852, which is copied to generate the second user data cyclic prefix portion 836, as indicated by arrow 854.

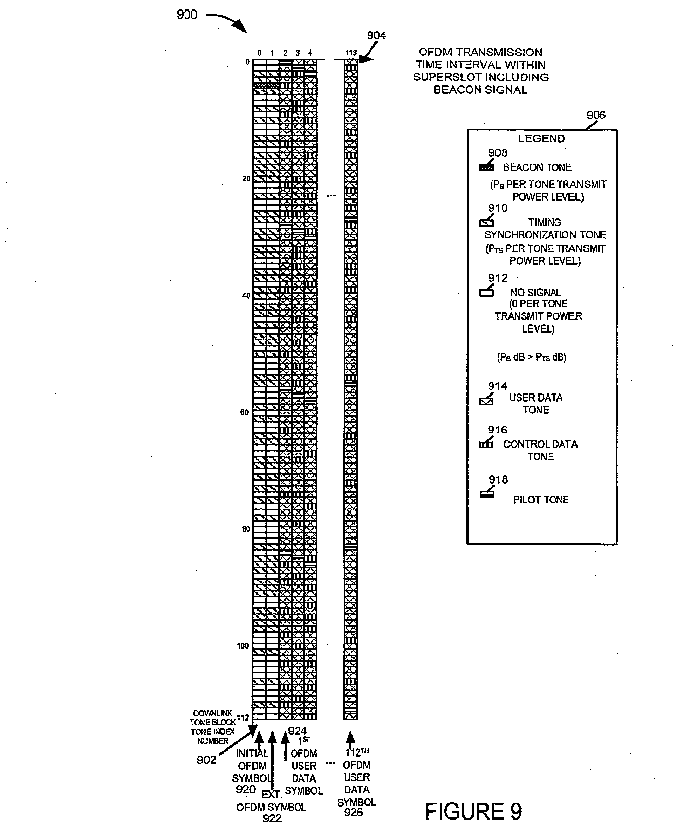

Figure 9 is drawing 900 illustrating exemplary beacon/timing synchronization broadcast composite multi-symbol signaling and subsequent signaling including user data in accordance with some embodiment of the present invention. Drawing 900 illustrates an exemplary two symbol wide beacon/timing synchronization signal including an initial OFDM symbol 920 and an extension OFDM symbol 922. The two symbol wide beacon/timing synchronization symbol is followed by 112 successive OFDM user data symbols (1st OFDM user data symbol 924, ... , 112^{th} OFDM user data symbol 926).

Horizontal axis 904 plots OFDM transmission time interval within a superslot including a beacon signal, a superslot having a time duration of 114 successive OFDM symbol transmission time periods. The beacon/timing synchronization signal occupies the first two OFDM symbol periods in the superslot, while the OFDM user data symbols occupy the next 112 OFDM symbol time periods. Each small rectangle represents the air link resource of an OFDM tone-symbol. Legend 906 indicates that: (i) beacon tones 908, having a P_{B} tone transmit power level, are indicated by full shading of a rectangle, (ii) timing synchronization tones 910, having a P_{TS} per tone transmit power level, are indicated by diagonal line shading, (iii) null tones 912, having a 0 per tone transmission poer level, are indicated by no shading, (iv) user data tones 914 are indicated by crosshatch shading, (v) control data tones 916 arc indicated by vertical line shading, and (vi) pilot tones 918 are indicated by horizontal line shading. The per tone beacon tone power level, P_{B} is greater than the per tone timing/synchronization signal power P_{TS}. In some embodiments, P_{B} is greater than P_{TS} by at least 6dB.

In this example, there is one beacon tone on the same tone, tone 4, for the 1^{st} two OFDM symbol transmission time periods; there are also 55 tones used for the 1^{st} two OFDM symbol transmission time periods corresponding to the timing/synchronization signal, the 55 tones being the same tones for the two symbol time periods. There also also 57 intentional NULL tones for the first two symbol time periods. It should be noted that the 55 tones of the timing synchronization signal are dispersed among the set of downlink tones such as to create a wideband signal.

During each of the next 112 subsequent OFDM,symbol time periods, a user data symbol is transmitted. The user data symbol includes a mixture of user data tones, control data tones, and/or pilot tones. For example, the user data tones correspond to portions of downlink traffic channel segment, while the control data tones corresponds to portions of control channel segments, and the pilot tones corresponds to the pilot channel. For any given OFDM user data symbol, e.g., 1^{st} OFDM user data symbol 924, there may be a plurality of downlink traffic segment being communicated. For example, for such an OFDM user data symbol, the set of user data tones may be distributed among four downlink traffic channel segments, each directed to a different wireless terminal, and tones corresponding to different downlink traffic channel segment being conveyed at different transmission power levels. Similarly the control data tones may correspond to different control channels and may be transmitted at different power levels. The pilot tones, e.g., four pilot tones per OFDM user data symbol, are transmitted at a single power level. The per tone transmission power levels for each of the user data tones 914, control data tones 916, and pilot tones 918 is a power level less than the per tone power level used by the beacon tone 908, e.g., at least 6dB less.

The first four OFDM symbols of Figure 9 may be representative of the signaling described with respect to Figure 8.

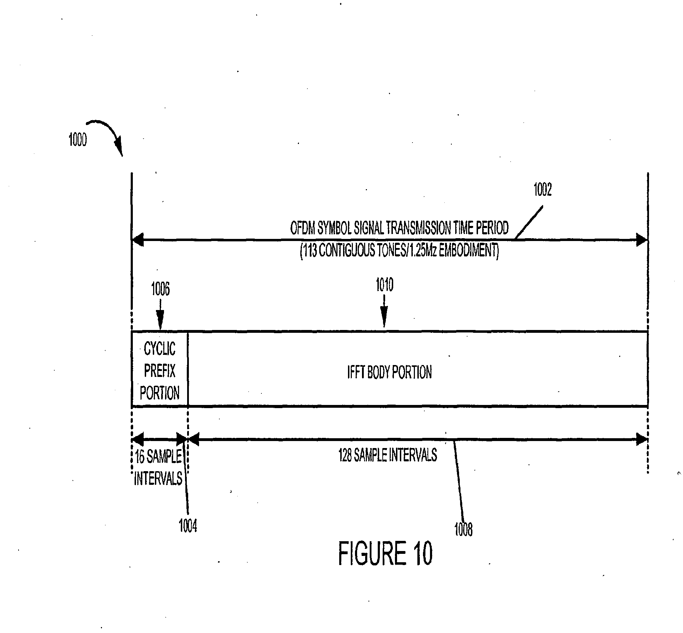

Figure 10 is a drawing 1000 used to illustrate the partitioning of an exemplary OFDM transmission time interval and exemplary signaling used to convey modulation symbol values. This example corresponds to an OFDM symbol transmission time interval for an exemplary 1.25Mz embodiment, with a downlink tone block of 113 contiguous tones. The OFDM symbol transmission time interval, e.g., approximately 100 micro-sec in duration, includes a first interval 1004 of 16 sample intervals used to convey a cyclic prefix portion 1006 followed by a second interval 1008 of 128 sample intervals used to convey a IFFT body portion 1010.

Figure 10 represent the pattern followed for a typical downlink OFDM symbol transmission signal, e.g., a user data OFDM symbol, in an exemplary 113 tone 1.25MHz embodiment. In accordance with a feature of the present invention, the composite beacon and timing synchronization signal, which occurs during two consecutive OFDM symbol transmission time intervals follows a different pattern.

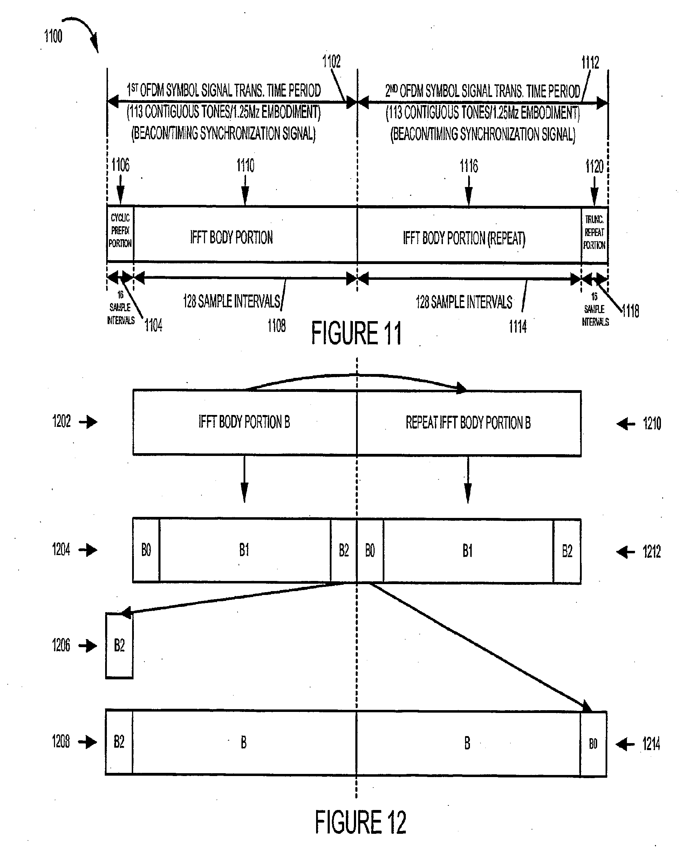

Drawing 1100 of Figure 11 illustrates that the first OFDM symbol transmission time period 1102, corresponding to the beacon/timing synchronization signal, follows the same pattern as a convention symbol as indicated in Figure 10 with a first interval 1104 conveying cyclic prefix portion 1106 followed by a second interval 1108 conveying a IFFT body portion 1110. However the second symbol signal transmission time period 1112, corresponding to the beacon/timing synchronization signal, follows a different pattern. 2nd OFDM symbol signal transmission time period 1112 includes a third interval 1114 of 128 sample intervals conveying IFFT body portion 1116, which is a repeat of IFFT body portion 1110; third interval 1114 is followed by fourth interval 1118 of 16 sample intervals which conveys truncated repeat portion 1120 which is a repeat of the 1^{st} 16 samples of portion 1110 or 1116. Thus, the 2^{nd} symbol is an extension symbol with respect to the 1^{st} OFDM symbol for the beacon/timing synchronization signaling. By using such a signaling pattern, the beacon/timing synchronization signal can be more easily detected by a wireless terminal, which may not be precisely synchronized, e.g., to within a cyclic prefix duration, but is synchronized to within an OFDM symbol transmission time interval. This approach in accordance with the invention is in contrast to transmitting a beacon/timing synchronization signal only one OFDM symbol time period wide or repeating the same identical single symbol wide beacon/timing synchronization signal for both the 1^{st} and 2^{nd} symbols, in which case there is typically a discontinuity on the boundary between the two symbols.

Figure 12 further illustrates exemplary beacon signal/timing synchronization signal construction and is to be viewed in correspondence with the timing intervals of Figure 11. Item 1202 indicates that a IFFT body portion B is generated. Item 1204 indicates the IFFT body portion B can be subdivided into a first section B0, a second section B1, and a third section B2. Item 1206 indicates the third section B2 is copied to be used as a cyclic prefix. Item 1208 indicates the first OFDM symbol is constructed by concatenating the cyclic prefix B2 and the IFFT body portion B as shown. The description will now proceed to the construction of the 2^{nd} OFDM symbol of the exemplary beacon/timing synchronization signal. Item 1210 indicates that IFFT body portion B is repeated. Item 1212 indicates that the repeat IFFT body portion can be partitioned in portions B0, B1, and B2. Item 1214 indicates that portion B0 is repeated and appended to repeat IFFT body port B to construct the 2^{nd} OFDM symbol.

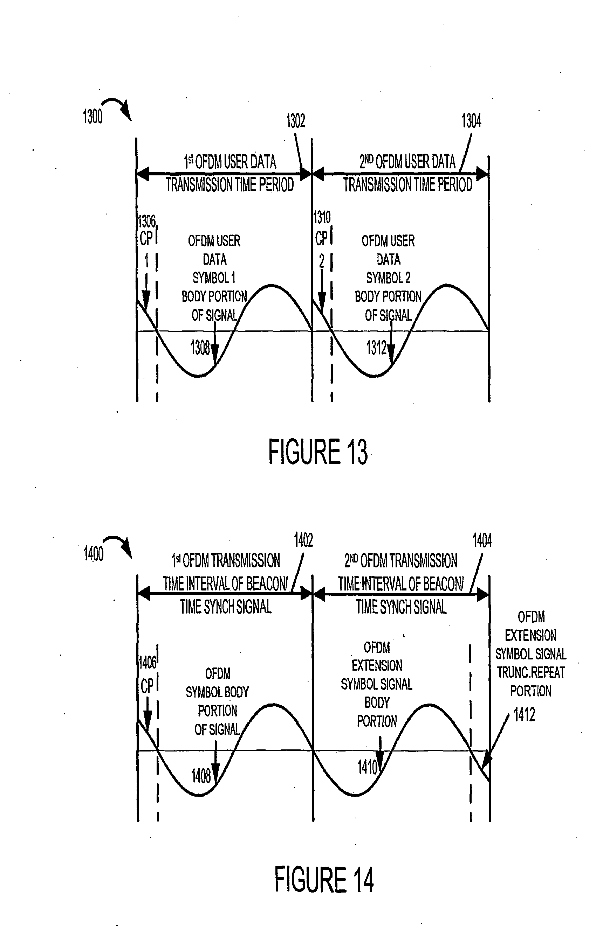

Figure 11 represents the signal generation pattern used in an exemplary multi-symbol transmission signal, e.g., a beacon/timing synchronization signal, in an exemplary 113 tone 1.25MHz embodiment. Drawing 1400 of Figure 14 illustrates that the first OFDM transmission time interval 1402, corresponding to the beacon/timing synchronization signal, follows the same pattern as a convention symbol as indicated in Figure 10 with a cyclic prefix portion 1406 followed by a IFFT body portion 1408. However the second OFDM symbol transmission time interval 1404, corresponding to the beacon/timing synchronization signal, follows a different pattern. 2nd OFDM symbol time interval 1404 includes IFFT body portion 1410, which is a repeat of IFFT body portion 1408; portion 1410 is followed by portion 1412 which is a repeat of the initial portion of the body portion 1410. Thus, the 2^{nd} OFDM symbol is an extension symbol with respect to the 1^{st} OFDM symbol for the beacon/timing synchronization signaling. By using such a signaling pattern, the beacon/timing synchronization signal can be more easily detected by a wireless terminal, which may not be precisely synchronized, e.g., to within a cyclic prefix duration.

Figure 13 is a drawing 1300 illustrating the concept of successive OFDM user data symbols using typical OFDM signaling. In the 1st OFDM symbol transmission time period 1302, a cyclic prefix 1306 is transmitted followed by an OFDM body portion of the signal 1308. In the 2^{nd} OFDM symbol transmission time period 1304, a cyclic prefix 1310 is transmitted followed by an OFDM body portion 1312. Note that there is a signal discontinuity at the boundary between 1^{st} OFDM transmission time interval 1302 and 2^{nd} OFDM transmission time interval 1304. Timing synchronization between the wireless terminal receiving the signal and the base station transmitting the signal needs to be to within the duration of the cyclic prefix interval so that the wireless terminal can be able to recover the signal information successfully. Note that in Figure 14, with the beacon/timing synchronization signal which includes an extension symbol, there is continuity across the boundary between 1^{st} OFDM symbol time period 1402 and 2^{nd} OFDM symbol time period 1404, facilitating beacon/timing synchronization signal detection and accurate energy measurements without precise timing synchronization between the base station and wireless terminal.

Figure 14 is a drawing 1400 illustrating the concept of beacon/timing synchronization signaling in accordance with the present invention. In the 1^{st} OFDM symbol transmission time period 1402, a cyclic prefix 1406 is transmitted followed by its corresponding OFDM body portion of the signal 1408. In the 2^{nd} OFDM symbol transmission time interval 1404, an OFDM extension signal is transmitted, which extends the first OFDM symbol signal, repeating the body portion successively and occupying the time interval 1404. Note that there is not a signal discontinuity at the boundary between 1^{st} OFDM transmission time period 1402 and 2^{nd} OFDM transmission time interval 1404. Timing synchronization between the wireless terminal receiving the signal and the base station transmitting the signal no longer needs to be to within the duration of the cyclic prefix interval so that the wireless terminal can be able to recover the signal information successfully; the timing synchronization between the wireless terminal and the base station can, in some embodiments, be within the duration of one OFDM symbol transmission time period plus the cyclic prefix duration and the signal information can still be recovered. In addition, if a tireless terminal monitoring beacon signals from base station sector transmitters some of which are not synchronized with respect to the wireless terminal has a FFT capture window being an OFDM symbol period wide, the wireless terminal can detect for an energy peak observable from among successive capture windows and recognize that the energy measured and signal recovered for that window can be used for beacon comparison purposes and timing synchronization purposes.

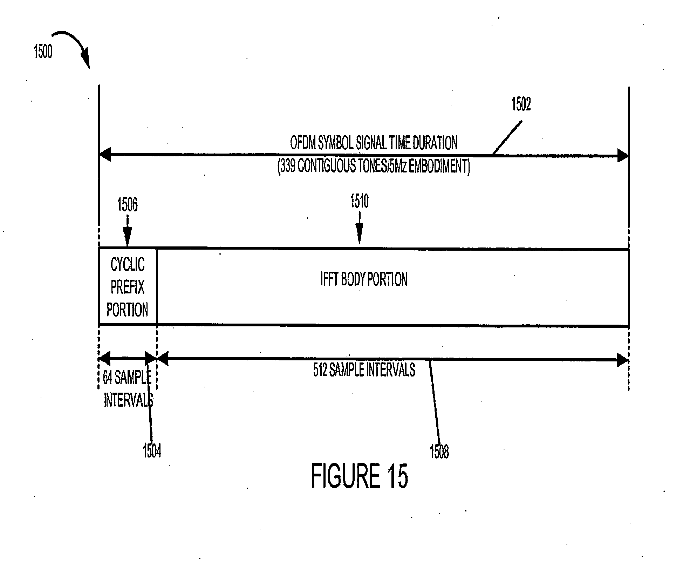

Figure 15 is a drawing 1500 used to illustrate the partitioning of an exemplary OFDM transmission time intervals and exemplary signaling used to convey modulation symbol values. This example corresponds to an OFDM symbol transmission time period for an exemplary 5.0MHz embodiment, using three downlink tone block of 113 contiguous tones each, comprising a combined set of 339 contiguous tones which are used by a base station sector to transmit an OFDM symbol. The OFDM symbol transmission time interval, e.g., approximately 100 micro-sec in duration, includes a first interval 1504 of 64 sample intervals used to convey a cyclic prefix portion 1506 followed by a second interval 1508 of 512 sample intervals used to convey a IFFT body portion 1510.

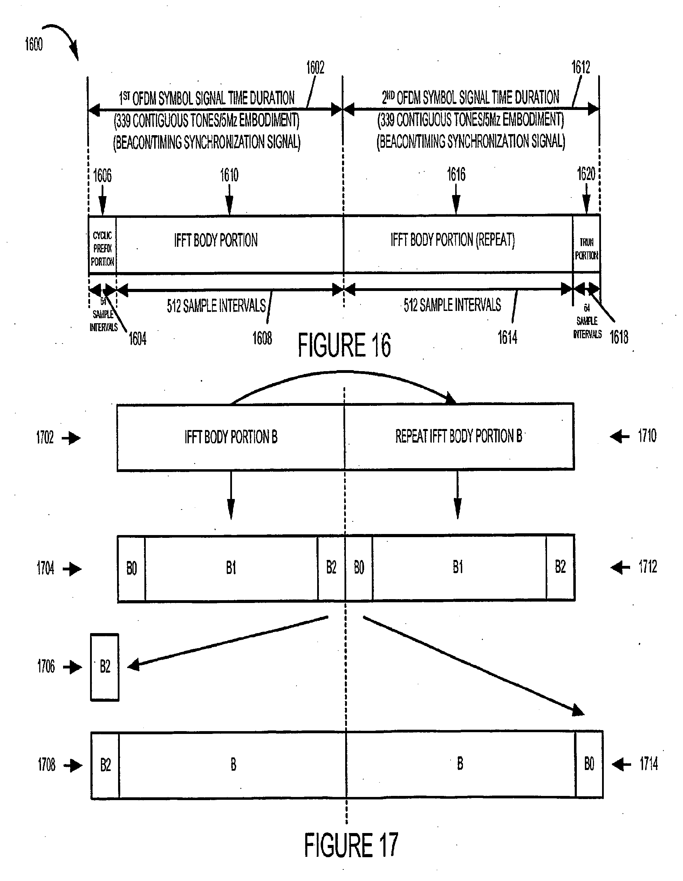

Figure 15 represent the pattern followed for a typical downlink OFDM symbol transmission signal, e.g., a user data OFDM symbol, in an exemplary 339 tone 5MHz embodiment. In accordance with a feature of the present invention, the composite beacon and timing synchronization signal, which occurs during two consecutive OFDM symbol transmission time periods follows a different pattern. Drawing 1600 of Figure 16 illustrates that the first OFDM symbol transmission time period 1602, corresponding to the beacon/timing synchronization signal, follows the same pattern as a convention symbol as indicated in Figure 15 with a first interval 1604 conveying cyclic prefix portion 1606 followed by a second interval 1608 conveying a IFFT body portion 1610. However the second OFDM symbol transmission time period 1612, corresponding to the beacon/timing synchronization signal, follows a different pattern. 2nd OFDM symbol time period 1612 includes a third interval 1614 of 512 sample intervals conveying IFFT body portion 1616, which is a repeat of IFFT body portion 1610; third interval 1614 is followed by fourth interval 1618 of 64 sample intervals which conveys truncated portion 1620 which is a repeat of the 1^{st} 64 samples of portion 1610 or 1616. Thus, the 2^{nd} OFDM symbol is an extension symbol with respect to the 1^{st} OFDM symbol for the beacon/timing synchronization signaling. By using such a signaling pattern, the beacon/timing synchronization signal can be more easily detected by a wireless terminal, which may not be precisely synchronized, e.g., to within a cyclic prefix duration. This approach in accordance with the invention is in contrast to repeating the same signal in both the 1^{st} and 2^{nd} symbols, in which case there would be a discontinuity on the boundary between the two symbols.

Figure 17 further illustrates exemplary beacon signal/timing synchronization signal construction and is to be viewed in correspondence with the timing intervals of Figure 16. Item 1702 indicates that a IFFT body portion B is generated. Item 1704 indicates the IFFT body portion B can be subdivided into a first section B0, a second section B1, and a third section B2. Item 1706 indicates the third section B2 is copied to be used as a cyclic prefix. Item 1708 indicates the first OFDM symbol is constructed by concatenating the cyclic prefix B2 and the IFFT body portion B as shown. The description will now proceed to the construction of the 2^{nd} OFDM symbol of the exemplary beacon/timing synchronization signal. Item 1710 indicates that IFFT body portion B is repeated. Item 1712 indicates that the repeat IFFT body portion can be partitioned in portions B0, B1, and B2. Item 1714 indicates that portion B0 is repeated and appended to repeat IFFT body port B to construct the 2^{nd} OFDM symbol.

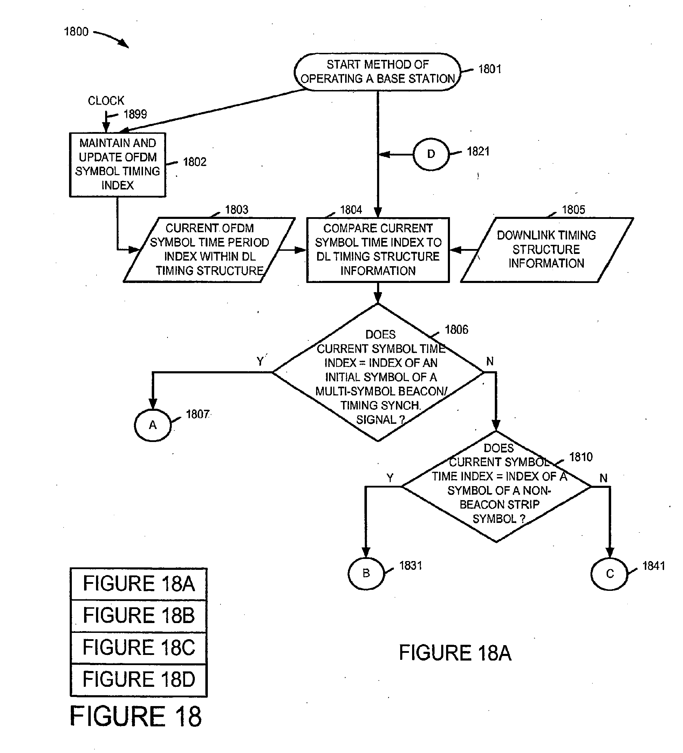

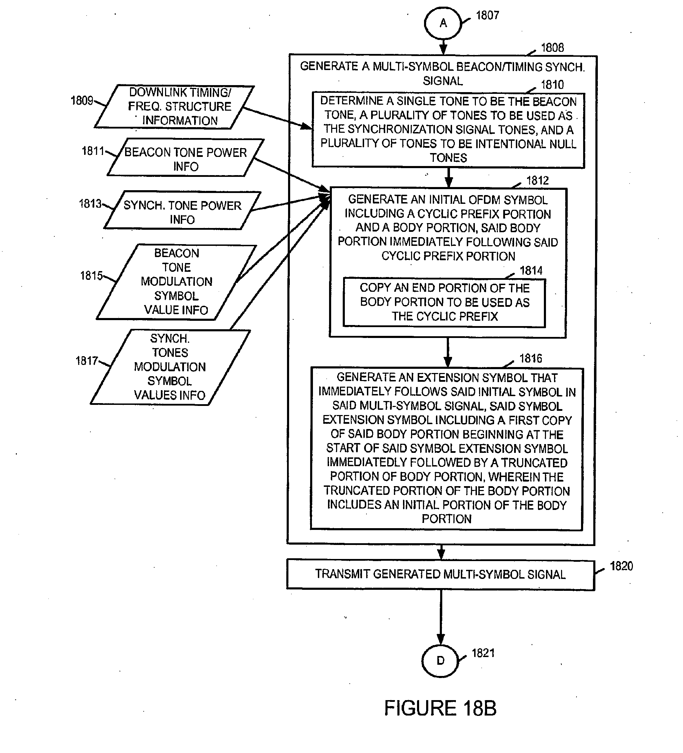

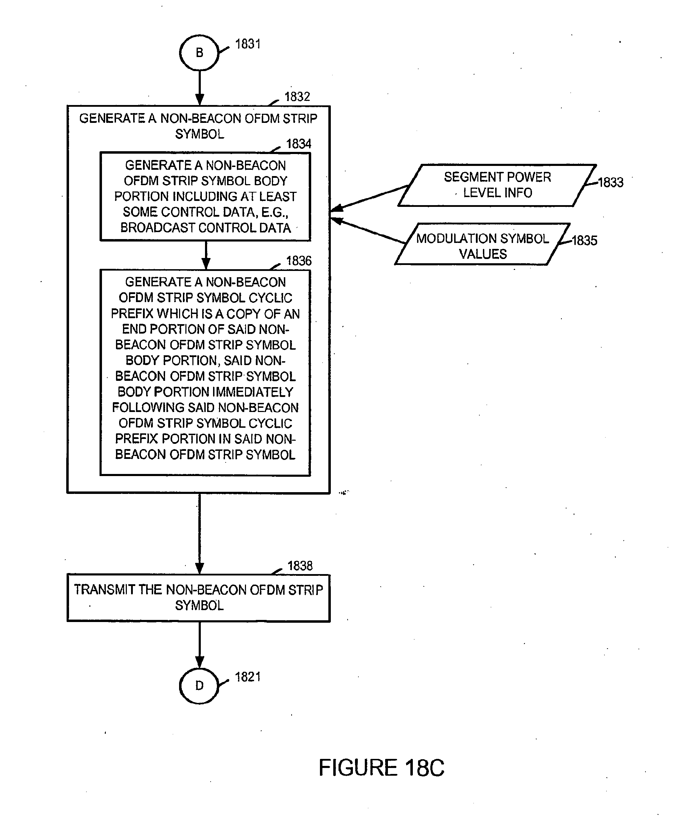

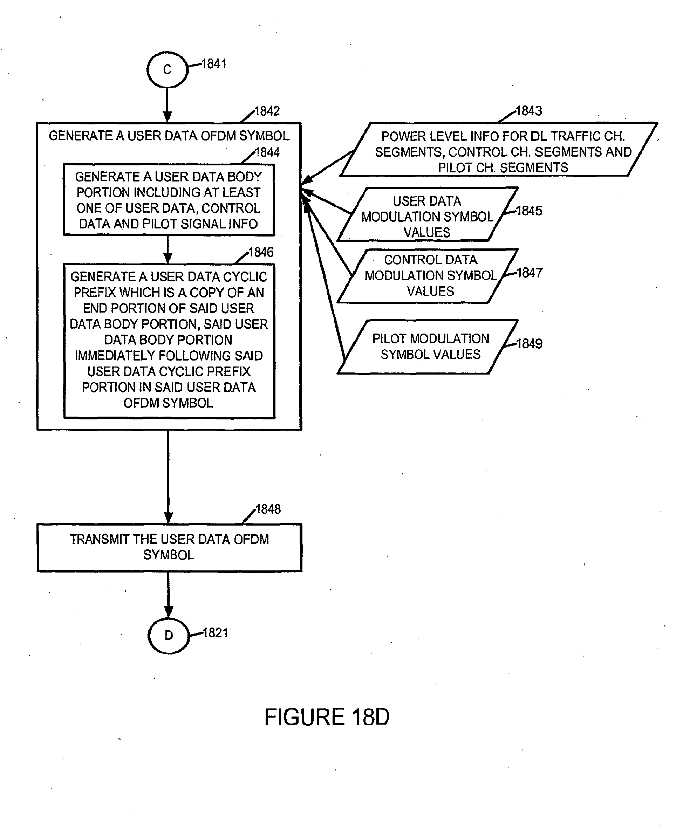

Figure 18, comprising the combination of Figure 18A, Figure 18B, Figure 18C and Figure 18D, is a flowchart 1800 of an exemplary method of operating a base station, in accordance with the present invention. For example, the exemplary base station may be base station 200 of Figure 2 and flowchart 1800 may describe the method of operating one of the base station's sector transmitters.

The exemplary method starts in step 1801, where the base station is powered on and initialized. Operation proceeds from start step 1801 to steps 1802 and 1804. In step 1802, the base station is operated to maintain and update, on an ongoing basis, a symbol timing index. Step 1802 is performed using a clock signal 1849 as an input and outputting a current OFDM symbol time period index within the downlink timing structure 1803.

In step 1804, the base station compares the current symbol time index 1803 to downlink timing structure information 1805. The downlink timing structure information 1805 identifies a recurring indexed downlink timing structure being used by the base station transmitter. For example, in some exemplary embodiments, the downlink timing structure includes superslots, each superslot including a first fixed number, e.g. 114, of consecutive OFDM. symbol transmission time periods. In some such embodiments, each superslot includes two strip OFDM symbol time periods followed by 112 user data OFDM symbol time periods. In some such embodiments, the two strip symbol OFDM symbol time periods of a given superslot in the downlink timing structure are used for one of: (i) a multi-symbol beacon/timing synchronization signal including an initial OFDM symbol and an extension OFDM symbol and (ii) two non-beacon OFDM strip symbols. Operation proceeds from step 1804 to step 1806:

In step 1806, the base station checks as to whether or not the current symbol time index equals the index of a multi-symbol beacon/timing synchronization signal as identified from the downlink timing structure information 1805. If the current symbol time index corresponds to multi-symbol beacon/timing synchronization signal then operation proceeds via connecting node A 1807 to step 1808; otherwise operation proceeds to step 1810.

In step 1808, the base station is operated to generate a multi-symbol beacon/timing synchronization signal. Step 1808 includes sub-step 1810, 1812, and 1816. In sub step 1810, the base station uses the downlink timing/frequency structure information 1809 to determine: a single tone to be the beacon tone, a plurality of tones to be used as the synchronization signal tones, and a plurality of tones to be intentional NULL tones. Operation proceeds from sub-step 1810 to sub-step 1812. In sub-step 1812, the base station generates an initial OFDM symbol including a cyclic prefix portion and a body portion, said body portion immediately following said cyclic prefix portion. In sub-step 1812, the base station uses beacon tone power information 1811, synchronization tone power information 1813, beacon tone modulation symbol value information 1815 and modulation symbol values corresponding to each of the synchronization tones 1817 to generate the body portion of the initial OFDM symbol. Sub-step 1812 includes sub-step 1814. In sub-step 1814, the base station copies an end portion of the body portion to be used as the cyclic prefix. Operation proceeds from sub-step 1812 to sub-step 1816.

In sub-step 1816, the base station generates an extension symbol that immediately follows the initial symbol in the multi-symbol signal. The extension symbol includes a first copy of the body portion beginning at the start of the extension signal. The first copy of the body portion is followed by a truncated portion of the body portion. The truncated portion of the body portion includes a copy of an initial portion of the body portion. Operation proceeds from step 1808 to step 1820.

In step 1820, the base station is operated to transmit the generated multi-symbol signal. Operation proceeds from step 1820 via connecting node D 1821 to step 1804.

Returning to step 1810, in step 1810 the base station checks as to whether or not the current symbol time index equals the index of a symbol of a non-beacon strip symbol. If the current symbol time index does correspond to the index of a non-beacon strip symbol, then operation proceeds via connecting node B 1831 to step 1832; otherwise operation proceeds via connecting node C 1841 to step 1842.

In step 1832 the base station generates a non-beacon OFDM strip symbol. Step 1832 includes sub-step 1834 and sub-step 1836. In sub-step 1834 the base station generates a non-beacon OFDM strip symbol body portion including at least some control data, e.g., broadcast control data. The base station uses segment power level information 1833 associated with the different segments being used for the non-beacon strip symbol and modulation symbol values 1835, e.g., constellation values conveying control data, associated with each of the tones. In sub-step 1836, the base station generates a non-beacon OFDM strip symbol cyclic prefix which is a copy of an end portion of the non-beacon OFDM strip symbol body portion. The non-beacon OFDM strip symbol is constructed such that its body portion immediately follows its cyclic prefix portion. Operation proceeds from step 1832 to step 1838. In step 1838, the base station transmits the non-beacon OFDM strip symbol. Operation proceeds from step 1838 via connecting node D 1821 to step 1804.

In some embodiments, for at least some non-beacon OFDM strip symbols, the base station sector transmitter does not transmit any signals. For example, in some exemplary single carrier embodiments including a beacon slot of 18 superslots, a base station sector transmitter transmits a multi-symbol beacon/timing synchronization signal during the two strip symbols of one superslot, refrains from transmitting during the two strip symbols of each of two superslots, and transmits broadcast control signals during each of the two strip symbols of the remaining 15 superslots of the beaconslot.

Returning to step 1842, in step 1842, the base station generates a user data OFDM symbol. Step 1842 includes sub-step 1844 and sub-step 1846. In sub-step 1844, the base station generates a user data body portion including at least one of user data, control data, and pilot signal information. In some embodiments, each OFDM user data symbol includes portions of a plurality of downlink traffic channel segments, e.g., 4 downlink traffic channel segments. The base station scheduler may scheduler each downlink traffic channel segment to one or more users and include modulation symbol values conveying coded user data bits. Different downlink traffic channel segments may be assigned to be transmitted at different transmission power levels. The base station uses segment power level information 1843 associated with the different segments, e.g., DL traffic channel segments, control channel segments, and pilot channel segments, being used for user data OFDM symbol when generating the body portion of OFDM user data symbol. The base station also uses user data modulation symbol values 1845, e.g., constellation values conveying coded user data, associated with each of the tones of downlink traffic channel segment, control data modulation symbol values 1847, e.g., constellation values conveying control data, associated with each of the tones of a control channel segment, and pilot modulation symbol values 1849 associated with the tones of the pilot channel segment, when generating the body portion of the OFDM user data symbol.

Operation proceeds from sub-step 1844 to sub-step 1846. In sub-step 1846, the base station generates a user data cyclic prefix which is a copy of an end portion of the body portion of the user data OFDM symbol. The OFDM user data symbol is constructed such that its body portion immediately follows its cyclic prefix portion. Operation proceeds from step 1842 to step 1848.

In step 1848 the base station is operated to transmit the user data OFDM symbol. Operation proceeds from step 1848 via connecting node D 1821 to step 1804.

In various embodiments, the base station sector transmitter is controlled to place more energy on the single beacon tone of a multi-symbol beacon/timing synchronization signal than on any other tone in the initial symbol of the multi-symbol signal. In some embodiments, the per tone energy placed on the beacon tone is at least 6dB higher then any other tone included in the initial symbol. For example, in some exemplary embodiments, the per tone power of the beacon signal is 24.5 dBs higher than the per tone power of the timing synchronization signal. In various embodiments, each of the user data OFDM symbols are transmitted at a per tone level which is at least 6dB lower than the highest per tone power level of a tone in an initial symbol of a multi-symbol OFDM beacon/timing synchronization signal. In some embodiments, each OFDM symbol includes the full downlink tone set used by the base station sector transmitter, e.g., a set of 113 tones or a set of 339 tones.

As previously described, in some embodiments, the second OFDM symbol of the multi-symbol, e.g., two symbol, beacon/timing synchronization signal is constructed as the cyclic extension of the first OFDM symbol.

In an exemplary single-carrier operation for the base station, let V4₁ and V4₂ be vector V4[0:143] for the first and second OFDM symbol of the multi-symbol beacon/timing synchronization signal. For k = 0 to k = 127, V4₂[k] = V4₁[k+16]. For k = 128 to 143, V4₂[k] = V4₂ [k-128].

In an exemplary three-carrier operation for the base station, let V4₁ and V4₂ be vector V4_5[0:575] for the first and second OFDM symbol of the multi-symbol beacon/timing synchronization signal. For k = 0 to k = 512, V4₂[k] = V4₁[k+64]. For k = 512 to 575, V4₂[k] = V4₂[k-512].

The techniques of the present invention may be implemented using software, hardware and/or a combination of software and hardware. The present invention is directed to apparatus, e.g., mobile nodes such as mobile terminals, base stations, communications system which implement the present invention. It is also directed to methods, e.g., method of controlling and/or operating mobile nodes, base stations and/or communications systems, e.g., hosts, in accordance with the present invention. The present invention is also directed to machine readable medium, e.g., ROM, RAM, CDs, hard discs, etc., which include machine readable instructions for controlling a machine to implement one or more steps in accordance with the present invention.

In various embodiments nodes described herein are implemented using one or more modules to perform the steps corresponding to one or more methods of the present invention, for example, multi-symbol signal generation, user symbol signal generation, and/or transmission steps. Thus, in some embodiments various features of the present invention are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, the present invention is directed to a machine-readable medium including machine executable instructions for causing a machine, e.g., processor and associated hardware, to perform one or more of the steps of the above-described method(s)

While described in the context of an OFDM system, at least some of the methods and apparatus of the present invention, are applicable to a wide range of communications systems including many other frequency division multiplexed systems and non-OFDM and/or non-cellular systems. Many of the methods and apparatus of the present invention are also applicable in the context of a multi-sector multi-cell wireless communications system.

Numerous additional variations on the methods and apparatus of the present invention described above will be apparent to those skilled in the art in view of the above description of the invention. Such variations are to be considered within the scope of the invention. The methods and apparatus of the present invention may be, and in various embodiments are, used with CDMA, orthogonal frequency division multiplexing (OFDM), and/or various other types of communications techniques which may be used to provide wireless communications links between access nodes and mobile nodes. In some embodiments the access nodes are implemented as base stations which establish communications links with mobile nodes using OFDM and/or CDMA. In various embodiments the mobile nodes are implemented as notebook computers, personal data assistants (PDAs), or other portable devices including receiver/transmitter circuits and logic and/or routines, for implementing the methods of the present invention.

## Claims

1. A method (1800) of operating a base station transmitter comprising:
generating (1808) a multi-symbol signal (406, 506, 708, 810, including a beacon tone signal, timing synchronisation signals and intentional NULL tones; said method further comprising:
generating (1812) an initial symbol (408, 508, 710, 816) including a cyclic prefix portion (412, 512, 714, 824, 1106,1606) and a body portion (414, 514, 716, 826, 1110, 1610), said body portion immediately following said cyclic prefix portion;
generating (1816) an symbol extension portion (410, 510, 712, 818) that immediately follows said initial symbol in said multi-symbol signal, said symbol extension portion including a first copy (416, 516, 718, 828, 1116, 1616) of said body portion beginning from the start of said symbol extension portion, a second copy of said body portion, said second copy of said body portion immediately following said first copy of said body portion, and truncated portion (720) of said body portion, said truncated portion including an initial portion of said body portion, said truncated portion immediately following said second copy of said body portion; and
transmitting 1820 said generated multi-symbol signal, said multi-symbol signal being an OFDM signal.

2. The method of clai 1, wherein generating an initial symbol including a cyclic prefix portion includes copy (1814) an end portion of said body portion to be used as said cyclic prefix.

3. A base station (106, 108, 200) comprising:
a signal generator for generating a multi-symbol signal a beacon tone signal, timing synchronisation signals and intentional NULL tones, said signal generator including:
an initial symbol generation module (220) for generating an initial symbol (710) including a cyclic prefix portion (714) and a body portion (716), said body portion immediately following said cyclic prefix portion;
a symbol extension generation module (220) for generating a symbol extension portion (712) that immediately follows said initial symbol in said multi-symbol signal, said symbol extension portion including a first copy of said body portion beginning from the start of said symbol extension portion, a second copy of said body portion, said second copy of said body portion immediately following said first copy of said portion, and a truncation module (236) for including a truncated portion of said body portion in said symbol extension portion, said truncated portion including an initial portion of said body portion, said truncated portion immediately following said second copy of said body portion; and
an OFDM signal transmitter (218) coupled to said signal generator module for transmitting said generated multi-symbol signal as a plurality of consecutive symbols.

4. The base station of claim 8, wherein said initial symbol generation module include a cyclic prefix generation module (233) for generating the cyclic prefix portion by copying an end portion of said body portion.

## Patentansprüche

1. Ein Verfahren (1800) zum Betreiben eines Basisstationssenders, wobei das Verfahren aufweist:
Erzeugen (1808) eines Multi-Symbolsignals (406, 506, 708, 810), das ein Baken-Tonsignal, Timing-, bzw. Zeitsteuerungssignale und absichtlich NULL-Töne beinhaltet, wobei das Verfahren ferner aufweist:
Erzeugen (1812) eines Anfangssymbols (408, 508, 710, 816), das einen zyklischen Präfix-Anteil (412, 512, 714, 824, 1106, 1606) und einen Rumpfanteil (414, 514, 716, 826, 1110, 1610) beinhaltet, wobei der Rumpfanteil unmittelbar auf den zyklischen Präfix-Anteil folgt;
Erzeugen (1816) eines Symbolerweiterungsanteils (410, 510, 712, 818), der unmittelbar auf das Anfangssymbol in dem Multi-Symbolsignal folgt, wobei der Symbolerweiterungsanteil eine erste Kopie (416, 516, 718, 828, 1116,1616) von dem Rumpfanteil, anfangend am Beginn des Symbolerweiterungsanteils, eine zweite Kopie von dem Rumpfanteil, wobei die zweite Kopie von dem Rumpfanteil unmittelbar auf die erste Kopie von dem Rumpfanteil folgt, und einen abgeschnittenen Anteil (720), der einen Anfangsanteil von dem Rumpfanteil beinhaltet, wobei der abgeschnittene Anteil unmittelbar auf die zweite Kopie von dem Rumpfanteil folgt, beinhaltet; und
Senden (1820) des erzeugten Multi-Symbolsignals, wobei das Multi-Symbolsignal ein OFDM-Signal ist.

2. Verfahren nach Anspruch 1, wobei das Erzeugen eines Anfangssymbols einschließlich eines zyklischen Präfix-Anteils Kopieren (1814) eines Endanteils von dem Rumpfanteil als den zyklischen Präfix-Anteil beinhaltet.

3. Eine Basisstation (106, 108, 200), die aufweist:
einen Signalgenerator zum Erzeugen eines Multi-Symbolsignals, das ein Baken-Tonsignal, Timing-, bzw. Zeitsteuerungssignale und absichtlich NULL-Töne beinhaltet, wobei der Signalgenerator Folgendes aufweist:
ein Anfangssignalerzeugungsmodul (220) zum Erzeugen eines Anfangssymbols (710), das einen zyklischen Präfix-Anteil (714) und einen Rumpfanteil (716) beinhaltet, wobei der Rumpfanteil unmittelbar auf den zyklischen Präfix-Anteil folgt;
ein Symbolerweiterungserzeugungsmodul (220) zum Erzeugen eines Symbolerweiterungsanteils (712), der unmittelbar auf das Anfangssymbol in dem Multi-Symbolsignal folgt, wobei der Symbolerweiterungsanteil eine erste Kopie von dem Rumpfanteil, anfangend am Beginn des Symbolerweiterungsanteils, eine zweite Kopie von dem Rumpfanteil, wobei die zweite Kopie von dem Rumpfanteil unmittelbar auf die erste Kopie von dem Rumpfanteil folgt, beinhaltet, und
ein Abschneidungsmodul (236) zum Einbeziehen eines abgeschnittenen Anteils von dem Rumpfanteil in den Symbolerweiterungsanteil, wobei der abgeschnittene Anteil einen Anfangsanteil von dem Rumpfanteil beinhaltet, wobei der abgeschnittene Anteil unmittelbar auf die zweite Kopie von dem Rumpfanteil folgt; und
einen OFDM-Signalsender (218), gekoppelt mit dem Signalgeneratormodul zum Senden des erzeugten Multi-Symbolsignals als einer Vielzahl von aufeinander folgenden Symbolen.

4. Basisstation nach Anspruch 3, wobei das Anfangssignalerzeugungsmodul ein zyklisches Präfix-Erzeugungsmodul (233) beinhaltet, und zwar zum Erzeugen des zyklischen Präfix-Anteils durch Kopieren eines Endanteils von dem Rumpfanteil.

## Revendications

1. Procédé (1800) d'actionnement d'un émetteur de station de base, comprenant les étapes suivantes :
générer (1808) un signal à plusieurs symboles (406, 506, 708, 810) comprenant un signal de fréquence de balise, des signaux de synchronisation et des fréquences de type NULL intentionnelles ; le procédé comprenant en outre les étapes suivantes :
générer (1812) un symbole initial (408, 508, 710, 816) comprenant une partie de préfixe cyclique (412, 512, 714, 824, 1106, 1606) et une partie de corps (414, 514, 716, 826, 1110, 1610), la partie de corps suivant immédiatement la partie de préfixe cyclique ;
générer (1816) une partie d'extension de symbole (410, 510, 712, 818) qui suit immédiatement le symbole initial dans le signal à plusieurs symboles, ladite partie d'extension de symbole comprenant une première copie (416, 516, 718, 828, 1116, 1616) de la partie de corps commençant au début de la partie d'extension de symbole, une deuxième copie de la partie de corps, la deuxième copie de la partie de corps suivant immédiatement la première copie de la partie de corps, et une partie tronquée (720) de la partie de corps, la partie tronquée comprenant une partie initiale de la partie de corps, la partie tronquée suivant immédiatement la deuxième copie de la partie de corps ; et
transmettre (1820) le signal à plusieurs symboles généré, le signal à plusieurs symboles étant un signal OFDM.

2. Procédé selon la revendication 1, dans lequel la génération d'un symbole initial comprenant une partie de préfixe cyclique comprend la copie (1814) d'une partie de fin de la partie de corps à utiliser comme préfixe cyclique.

3. Station de base (106, 108, 200) comprenant :
un générateur de signaux pour générer un signal à plusieurs symboles, un signal de fréquence de balise, des signaux de synchronisation et des fréquences de type NULL intentionnelles, le générateur de signaux comprenant :
un module de génération de symbole initial (220) pour générer un symbole initial (710) comprenant une partie de préfixe cyclique (714) et une partie de corps (716), la partie de corps suivant immédiatement la partie de préfixe cyclique ;
un module de génération d'extension de symbole (220) pour générer une partie d'extension de symbole (712) qui suit immédiatement le symbole initial dans le signal à plusieurs symboles, la partie d'extension de symbole comprenant une première copie de la partie de corps commençant au début de la partie d'extension de symbole, une deuxième copie de la partie de corps, la deuxième copie de la partie de corps suivant immédiatement la première copie de la partie de corps, et
un module de troncature (236) pour inclure une partie tronquée de la partie de corps dans la partie d'extension de symbole, la partie tronquée comprenant une partie initiale de la partie de corps, la partie tronquée suivant immédiatement la deuxième copie de la partie de corps ; et
un émetteur de signaux OFDM (218) couplé au module générateur de signal pour transmettre le signal à plusieurs symboles généré sous forme d'une pluralité de symboles consécutifs.

4. Station de base selon la revendication 3, dans laquelle le module de génération de symbole initial comprend un module de génération de préfixe cyclique (233) pour générer la partie de préfixe cyclique en copiant une partie de fin de la partie de corps.
